# EUROPÄISCHE PATENTANMELDUNG

(11) **EP 2 431 515 A1**
(43) Veröffentlichungstag der Anmeldung: **21.03.2012**
(21) Anmeldenummer: 11401585.2
(22) Anmeldetag: 01.09.2011
(51) Int. Cl.: D06F 39/08, D06F 39/12, F16L 11/12, F16L 33/22

(54) **Ablaufschlauch für ein wassergespeistes Haushaltsgerät**

(30) Priorität: 21.09.2010 DE 102010037669
(71) Anmelder: Miele & Cie. KG, 33332 Gütersloh (DE)
(72) Erfinder: Bethlehem, Hermann, 33334 Gütersloh (DE); Buchhorn, Viktoria, 33334 Gütersloh (DE); Mondroch, Albert, 33442 Herzebrock-Clarholz (DE)

(57) **Zusammenfassung**

Die Erfindung betrifft einen Ablaufschlauch (1) für ein wassergespeistes Haushaltsgerät, (2) wie beispielweise eine Waschmaschine (3) mit einer in einem Laugenbehälter drehbar gelagerten Trommel, oder eine Geschirrspülmaschine, der an einer Gahäusewand (4) des Gerätes (2) an einen geräteseitig angeordneten Ablaufstutzen (5) anschließbar ist, und wobei dieser eine Anschlusshülse (6) aufweist, die über einen umlaufenden Dichtungsring (8) zum wasserdichten Anschluss verfügt. Hierbei ist erfindungsgemäß die Anschlusshülse (6) zur werkzeuglosen Montage mittels eines Steckelements (9) an dem geräteseitigen Ablaufstutzen (5) festlegbar.

## Beschreibung

Die Erfindung betrifft einen Ablaufschlauch für ein wassergespeistes Haushaltsgerät, wie beispielweise eine Waschmaschine mit einer in einem Laugenbehälter drehbar gelagerten Trommel, oder eine Geschirrspülmaschine, der an einer Gehäusewand des Gerätes an einen geräteseitig angeordneten Ablaufstutzen anschließbar ist, wobei der Ablaufschlauch eine Anschlusshülse aufweist, die über einen umlaufenden Dichtungsring zum wasserdichten Anschluss verfügt.

Bei aus dem Stand der Technik bekannten, wassergespeisten Haushaltsgeräten wird im rückwärtigen Bereich des Gerätes ein Anschluss für einen Ablaufschlauch zur Entsorgung des Spülwasser oder der Lauge vorgesehen. Dieser wird an einem an der Rückseite zugängigen Ablaufstutzen montiert, und zwar derart, dass er von außen wasserdicht auf der Rückseite des Haushaltsgerätes befestigt wird. Die Dichtwirkung wird hierbei mit Hilfe eines O-Ringes erzielt, der sich an der Anschlusshülse des Ablaufschlauches befindet. Um ein ungewolltes Lösen des Ablaufschlauches zu unterbinden, wird dieser mit einer Überwurfmutter am Ablaufstutzen festgelegt.

Bei dieser Art der Festlegung des Ablaufschlauches wird es als nachteilig angesehen, dass eine Demontage des Ablaufschlauches nur unter Zuhilfenahme von Werkzeugen erfolgen kann. Dies ist insbesondere dann von Nachteil, wenn mit dem Haushaltsgerät ein Umzug vorgenommen werden muss, wobei sich dann eine Demontage des Ablaufschlauches aufwendig gestaltet, und wobei dann oft auch der Kundendienst herangezogen werden muss.

Der Erfindung stellt sich somit das Problem hier einen Ablaufschlauch für ein wassergespeistes Haushaltsgerät bereitzustellen, der in seiner Handhabung beim Anschluss bzw. bei der Demontage leicht und einfach ausgestaltet ist.

Erfindungsgemäß wird dieses Problem mit einem Ablaufschlauch mit den Merkmalen des unabhängigen Patentanspruchs 1 und mit einem wassergespeisten Haushaltgerät mit den Merkmalen des Anspruchs 11 gelöst. Vorteilhafte Ausgestaltungen und Weiterbildungen der Erfindung ergeben sich aus den jeweils nachfolgenden abhängigen Ansprüchen.

Die mit der Erfindung erreichten Vorteile bestehen darin, dass der Ablaufschlauch von außen ohne Zuhilfenahme von Werkzeug an den Ablaufstutzen der wasserführenden Rücklaufsicherung des Gerätes angeschlossen werden kann. Somit kann der Betreiber des Gerätes beim Transport der Maschine, zum Beispiel beim Wohnungswechsel, den Schlauch schnell selbst entfernen. Außerdem ist der Betreiber in der Lage einen beschädigten Ablaufschlauch hier selbst auszuwechseln.

Als einfaches und zuverlässiges Dichtungsprofil hat sich die Ausführung eines in einer Nut angeordneten O-Ringes erwiesen.

Nach einer vorteilhaften Weiterbildung der Erfindung wird der Ablaufschlauch, der als Wellschlauch ausgebildet ist, im Blasverfahren hergestellt. Bei diesem Fertigungsverfahren besteht die Möglichkeit den Anschlussbereich mit zwei umlaufenden Nuten auszustatten, die den O-Ring zur Abdichtung und die Sicherungsscheibe zur Befestigung aufnehmen können. Die Montage des Ablaufschlauches ist dadurch einfach und verlässlich.

Zur werkzeuglosen Montage schlägt die Erfindung vor, dass die Anschlusshülse mittels eines Steckelementes an dem geräteseitigen Ablaufstutzen festlegbar ist. Aufgrund der Ausbildung einer einfachen Steckverbindung ist es möglich, dass durch einfaches Betätigen des Steckelementes hier die Verbindung gelöst bzw. festgesetzt werden kann. Hierbei greift das Steckelement im gesteckten Zustand in Schlitze, die in der Wand des Ablaufstutzens angeordnet sind. Das Steckelement als solches besteht in vorteilhafter Weise aus einer klammerartigen Scheibe, die im gesteckten Zustand der Anschlusshülse an den Ablaufstutzen klipsbar ist. Somit wird eine Selbsthalterung des Steckelementes erreicht, die gegen ein Selbstlösen bei Vibration des Gerätes gesichert ist.

Die Montage erfolgt hierbei in einfacher Weise, wobei das Steckelement an den Ablaufstutzen quer zur Montagerichtung der Anschlusshülse gesteckt wird. Somit versteht es sich von selbst, dass, wenn die Anschlusshülse in den Anschlussstutzen eingeführt ist, durch einfaches Aufdrücken des Steckelementes quer zur Montagerichtung die Verbindung erfolgt, wobei hier die Schlitze bereits die Schieberichtung kulissenartig vorgeben.

Nach einer vorteilhaften Ausgestaltung der Erfindung greift im gesteckten Zustand der Anschlusshülse die klammerartige Scheibe mit ihren innen liegenden Schenkelbereichen in eine an der Anschlusshülse angeordnete umlaufende Nut. Dabei sind die Schenkelbereiche sichelförmig ausgebildet. Bei Betätigung insbesondere der klammerartigen Scheibe sind die Schenkelbereiche über ein als Griffelement ausgebildetes Stegelement verbunden. Somit ist im montierten Zustand immer die Zugänglichkeit zum Herausziehen des Steckelementes gegeben. Das Griffelement kann hierbei leicht mit den Fingern ergriffen werden, um auf diese Weise die klammerartige Verbindung zu lösen, wobei die schenkelartigen Bereiche dann nach außen über den Umfang der Anschlusshülse spreizbar sind. Hierbei ist von Vorteil, dass im Bereich des Steges Stufenabsätze zur Begrenzung des Schiebeweges angeordnet sind. Somit wird eine Begrenzung der Einsteckrichtung vorgegeben, was eine sichere nach außen weisende Lage des Griffelementes bereitstellt.

In Weiterbildung der Erfindung ist der Ablaufschlauch im Blasverfahren herstellbar, wobei mit diesem Fertigungsverfahren am Anschlussstutzen die beiden umlaufenden Nuten für den O-Ring und das Steckelement einformbar sind.

Die Erfindung betrifft in gleicher Weise ein wassergespeistes Haushaltsgerät, welches an seiner Rückseite einen geräteseitig angeordneten Ablaufstutzen zum Anschließen eines mit einer Anschlusshülse versehenen Ablaufschlauches umfasst, wobei der Ablaufschlauch die bereits beschriebenen Merkmale umfasst. Die Positionsangaben und Seitenbezeichnungen beziehen sich auf die betriebsgemäße Aufstellpostition des Gerätes.

Ein Ausführungsbeispiel der Erfindung ist in den Zeichnungen rein schematisch dargestellt und wird nachfolgend näher beschrieben. Es zeigen:
- Figur 1: eine perspektivische ausschnittsweise Rückansicht eines wassergespeisten Haushaltsgerätes, wie hier beispielsweise dargestellt eine Waschmaschine;
- Figur 2: eine weitere perspektivische Darstellung des Ablaufstutzens mit Anschlusshülse in explosionsartiger Darstellung;
- Figur 3a, 3b: eine geschnittene Darstellung a) des Ablaufschlauches im demontierten Zustand zum Anschlussstutzen und eine geschnittene Darstellung b) im montierten Zustand und
- Figur 4a, 4b: eine weitere geschnittene Ansicht a) in Draufsicht auf das Steckelement im gelösten Zustand und Ansicht b) im gesteckten Zustand.

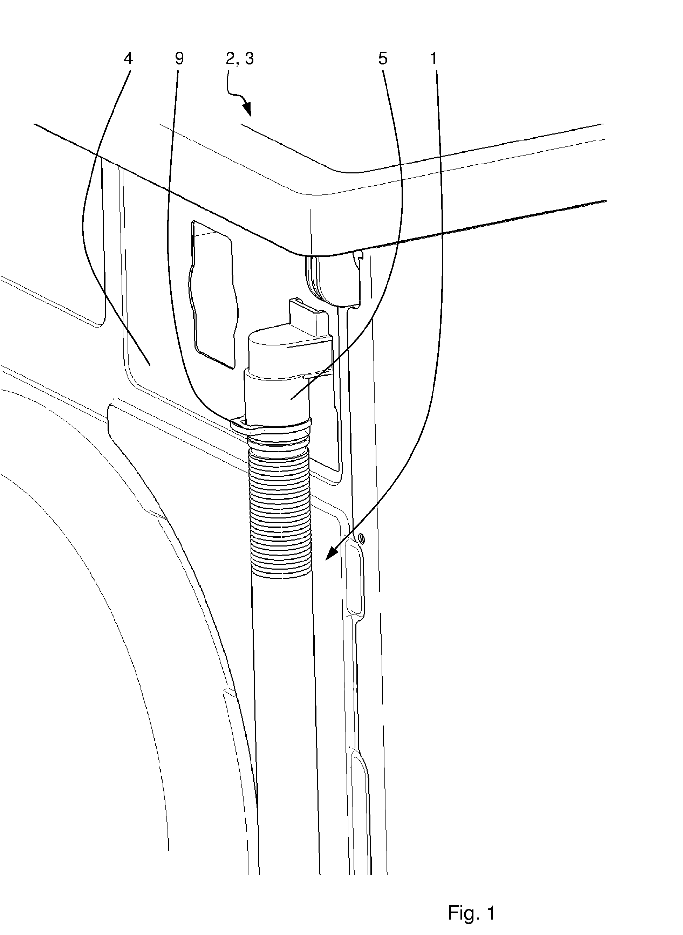

Die Figur 1 zeigt in der Perspektive einen Ablaufschlauch 1 für ein wassergespeistes Haushaltsgerät 2, wie dies in der Figur 1 als eine Waschmaschine 3 dargestellt ist, wobei die Waschmaschine 3 einen Laugenbehälter umfasst, in dem eine drehbar gelagerte Trommel angeordnet ist.

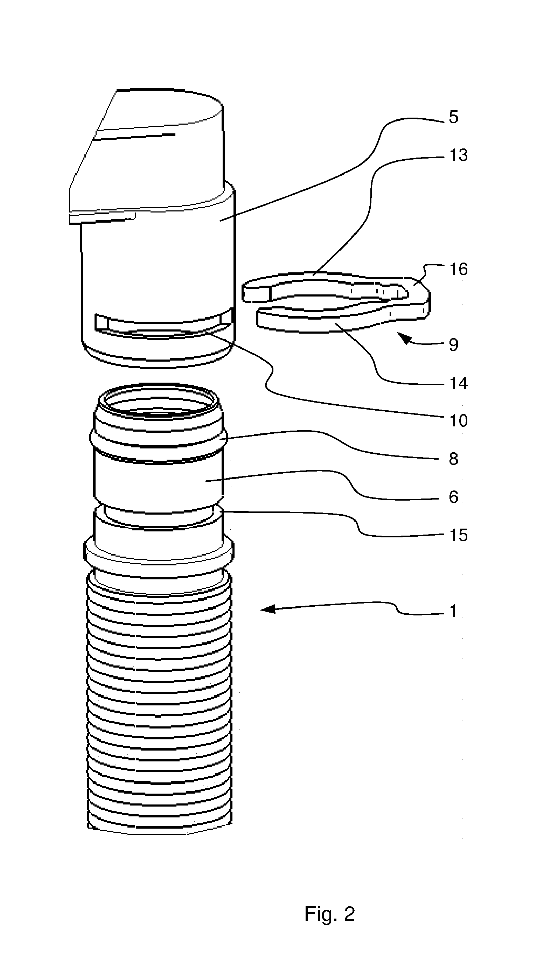

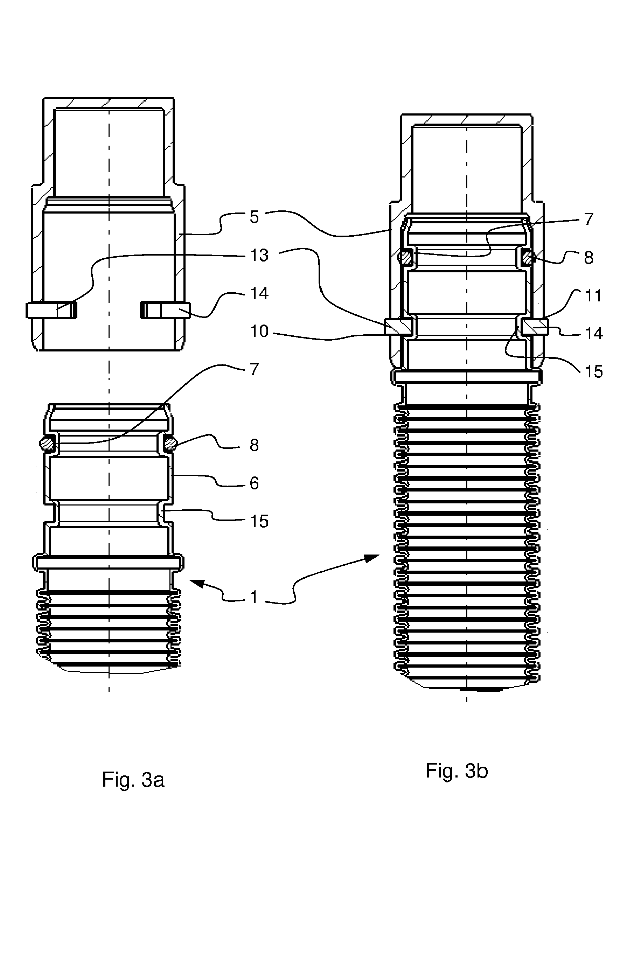

Der Ablaufschlauch 1 befindet sich hier vorzugsweise an der Rückseite 4 des Gerätes 2, wobei dieser an einem geräteseitig angeordneten Ablaufstutzen 5 anschließbar ist. Der Ablaufschlauch 1 weist eine Anschlusshülse 6 auf, die besser in den Figuren 2 und 3 zu erkennen ist.

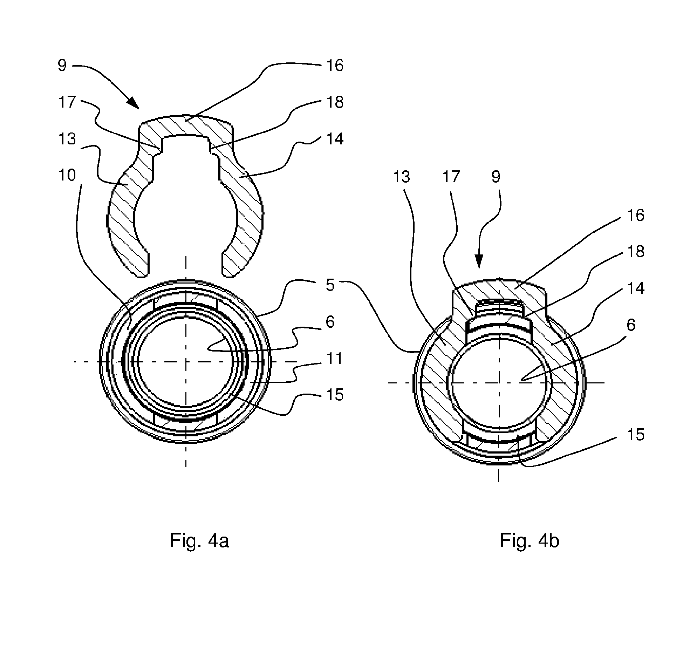

Die Anschlusshülse 6 verfügt hierbei über einen in einer Nut 7 angeordneten O-Ring 8 zum wasserdichten Anschluss. Die Nut 7 mit ihrem O-Ring 8 ist insbesondere in der Figur 3a zu erkennen. Wie insbesondere aus der Zusammenschau der Figuren 1 und 2 zu erkennen ist, ist die Anschlusshülse 6 zur werkzeuglosen Montage mittels eines Steckelementes 9 an den geräteseitigen Ablaufstutzen 5 festlegbar. Wie aus der Figur 2 zu erkennen ist, greift das Steckelement 9 im gesteckten Zustand in am Ablaufstutzen 5 angeordnete Schlitze 10 und 11, die in der Wand des Ablaufstutzens 5 angeordnet sind. Dabei ist das Steckelement 9 als klammerartige Scheibe 12 aus einem Kunststoffformteil oder einem Metallformteil ausgebildet, wie diese insbesondere in der Figur 4a und 4b besser zu erkennen ist. Die klammerartige Scheibe 9 ist im gesteckten Zustand der Anschlusshülse 6, wie dies in den Figuren 3b und 4b zu erkennen ist, an den Ablaufstutzen 5 anklipsbar. Das Steckelement 9 ist an den Ablaufstutzen 5, wie insbesondere aus der Figur 2 deutlich zu erkennen, quer zur Montagerichtung der Anschlusshülse 6 steckbar. Wie aus der Zusammenschau der Figuren 3 und 4 zu erkennen ist, greift im gesteckten Zustand der Anschlusshülse 6 die klammerartige Scheibe 9 mit ihren innen liegenden Schenkelbereichen 13 und 14 in eine an der Anschlusshülse 6 angeordnete umlaufende Nut 15. Die Schenkelbereiche 13 und 14 sind hierbei, wie insbesondere aus der Figur 4 zu erkennen, sichelartig ausgebildet. Somit versteht es sich von selbst, dass, wenn die beiden als Sicheln ausgebildeten Schenkelbereiche 13 und 14 auf die Anschlusshülse 6 geschoben werden, diese nach außen ausweichen, und im gesteckten Zustand dann den Umfang in der Nut 15 der Anschlusshülse 6 umgreifen, so dass es zu dem Klammerungs- und Halterungseffekt kommt, der ein Selbstlösen des Steckelementes 9 verhindert.

Um insbesondere die Zugänglichkeit des Steckelementes 9 bereit zu stellen, und somit auch die werkzeuglose Betätigung des Steckelementes 9 zu gewährleisten, sind die Schenkelbereiche 13 und 14 über einen als Griffelement ausgebildeten Steg 16 verbunden. Wie aus der Figur 4 zu erkennen ist, sind im Bereich des Steges 16 Stufenabsätze 17 und 18 zur Begrenzung des Einschiebweges angeordnet. Dies wird deutlich in der Figur 4b, wo sich die Stufenabsätze 17 und 18 an die Außenwand des Ablaufstutzens 5 legen. In Weiterbildung der Erfindung wird der Ablaufschlauch 1 im Blasverfahren hergestellt, wobei mit diesem Fertigungsverfahren an der Anschlusshülse 6 die beiden umlaufenden Nuten 7 und 15 für den O-Ring 8 und das Steckelement 9 mit eingeformt werden.

## Patentansprüche

1. Ablaufschlauch (1) für ein wassergespeistes Haushaltsgerät (2), wie beispielweise eine Waschmaschine (3), mit einer in einem Laugenbehälter drehbar gelagerten Trommel, oder eine Geschirrspülmaschine, der an einer Gehäusewand (4) des Gerätes (2) an einen geräteseitig angeordneten Ablaufstutzen (5) anschließbar ist, und wobei dieser eine Anschlusshülse (6) aufweist, die über einen umlaufenden Dichtungsring (8) zum wasserdichten Anschluss verfügt,
**dadurch gekennzeichnet,**
**dass** die Anschlusshülse (6) zur werkzeuglosen Montage mittels eines Steckelements (9) an dem geräteseitigen Ablaufstutzen (5) festlegbar ist.

2. Ablaufschlauch nach Anspruch 1,
**dadurch gekennzeichnet,**
**dass** die Anschlusshülse (6) als Dichtungsring einen in einer Nut (7) angeordneten O-Ring (8) umfasst.

3. Ablaufschlauch nach Anspruch 1,
**dadurch gekennzeichnet,**
**dass** das Steckelement (9) im gesteckten Zustand in am Ablaufstutzen (5) angeordnete Schlitze (10, 11) greift, die in der Wand des Ablaufstutzens (5) angeordnet sind.

4. Ablaufschlauch nach Anspruch 3,
**dadurch gekennzeichnet,**
**dass** das Steckelement (9) als klammerartige Scheibe ausgebildet ist, die im gesteckten Zustand der Anschlusshülse (6) an den Ablaufstutzen (5) anklipsbar ist.

5. Ablaufschlauch nach Anspruch 4,
**dadurch gekennzeichnet,**
**dass** das Steckelement (9) an den Ablaufstutzen (5) quer zur Montagerichtung der Anschlusshülse (6) steckbar ist.

6. Ablaufschlauch nach Anspruch 5,
**dadurch gekennzeichnet,**
**dass** im gesteckten Zustand der Anschlusshülse (6) die klammerartige Scheibe (9) mit ihren innen liegenden Schenkelbereichen (13, 14) in eine an der Anschlusshülse (6) angeordnete umlaufende Nut (15) greift.

7. Ablaufschlauch nach Anspruch 6,
**dadurch gekennzeichnet,**
**dass** die Schenkelbereiche (13, 14) sichelförmig ausgebildet sind.

8. Ablaufschlauch nach Anspruch 6 oder 7,
**dadurch gekennzeichnet,**
**dass** die Schenkelbereiche (13, 14) über einen als Griffelement ausgebildeten Steg (16) verbunden sind.

9. Ablaufschlauch nach Anspruch 8,
**dadurch gekennzeichnet,**
**dass** im Bereich des Steges (16) Stufenabsätze (17, 18) zur Begrenzung des Einschiebeweges angeordnet sind.

10. Ablaufschlauch nach Anspruch 1 oder 2,
**dadurch gekennzeichnet,**
**dass** der Ablaufschlauch (1) im Blasverfahren herstellbar ist, wobei mit diesem Fertigungsverfahren an der Anschlusshülse (6) die beiden umlaufenden Nuten (7, 15) für den O-Ring (8) und das Steckelement (9) einformbar sind.

11. Wassergespeistes Haushaltsgerät (2), welches an seiner Rückseite (4) einen geräteseitig angeordneten Ablaufstutzen (5) zum Anschließen eines mit einer Anschlusshülse (6) versehenen Ablaufschlauches (1) nach einem oder mehreren der Ansprüche 1 bis 10 umfasst.
